# EUROPÄISCHE PATENTANMELDUNG

(11) **EP 4 806 668 A1**
(43) Veröffentlichungstag der Anmeldung: **16.09.2026**
(21) Anmeldenummer: 26160855.8
(22) Anmeldetag: 26.02.2026
(51) Int. Cl.: B60C 9/22, B60C 15/00, B60C 15/04, B60C 15/06

(54) **NUTZFAHRZEUGREIFEN**

(30) Priorität: 11.03.2025 DE 102025109132
(71) Anmelder: Continental Reifen Deutschland GmbH, 30175 Hannover (DE)
(72) Erfinder: Kranich, Henrik, 30175 Hannover (DE); Plückers, Matthias, 30175 Hannover (DE); Pruß, Noa, 30175 Hannover (DE); Dettmer, Fabian, 30175 Hannover (DE)
(74) Vertreter: Continental Corporation

(57) **Zusammenfassung**

Die Erfindung betrifft einen Nutzfahrzeugreifen mit einer Karkasseinlage (5), einem Gürtelverband (6) mit zumindest drei Gürtellagen (6a, 6b, 6c) und mit Wulstbereichen (11).

In zumindest einer der Gürtellagen (6b) verläuft bzw. verlaufen der bzw. die Stahlkord(e) zur Umfangsrichtung unter einem Winkel von 0° bis 5°, wobei zumindest zwei, insbesondere sämtliche der folgenden Merkmale vorhanden sind:
a. Die Stahlkorde des Stahlkordwulstverstärkers (16) sind in dessen Gummimaterial in einer gemittelten Korddichte von höchstens 48 epdm angeordnet,
b. das Hochschlagende (5a') des Karkasshochschlags (5a) befindet sich in einer relativ zur Wulst-Bezugslinie (Lw) in radialer Richtung ermittelten Höhe (h_{HE}) von höchstens 35,0 mm,
c. der Wulstkern (13) weist, im Reifenquerschnitt betrachtet, eine auf den Kerndraht (13a) bezogene Querschnittsfläche mit einem Flächeninhalt (A₁₃) von höchstens 90,0 mm² auf.

## Beschreibung

Die Erfindung betrifft einen Nutzfahrzeugreifen mit einer Karkasseinlage, einem Gürtelverband mit zumindest drei Gürtellagen und mit Wulstbereichen mit jeweils einem mit einem Felgen-Eckpunkt-Bezugspunkt korrespondierenden Wulst-Bezugspunkt, einer in axialer Richtung durch diesen verlaufende Wulst-Bezugslinie und mit Wulstbauteilen, zu welchen ein Wulstkern aus einem Kerndraht, ein Kernprofil und ein Stahlkordwulstverstärker gehören, wobei die Karkasseinlage in jedem Wulstbereich von der dem Reifeninnenraum zugewandten Seite kommend in Richtung Reifenaußenseite um den Wulstkern umgeschlagen ist sowie reifenaußenseitig einen Karkasshochschlag mit einem neben dem Kernprofil liegenden Hochschlagende und einer im Reifenquerschnitt durch dieses in axialer Richtung verlaufenden Hochschlag-Bezugslinie aufweist, wobei der Stahlkordwulstverstärker aus in Gummimaterial eingebetteten Stahlkorden besteht, an der dem Wulstkern abgewandten Seite der Karkasseinlage verläuft und, im Reifenquerschnitt betrachtet, einen die Hochschlag-Bezugslinie kreuzenden, reifeninnenseitigen Stahlkordwulstverstärkerabschnitt mit einen axial seitlich des Kernprofils liegenden, freien Ende und einen die Hochschlag-Bezugslinie nicht kreuzenden, reifenaußenseitigen Stahlkordwulstverstärkerabschnitt mit einem im axial seitlich des Karkasshochschlags liegenden, freien Ende umfasst.

Ein derartiger Nutzfahrzeugreifen ist beispielsweise aus der DE 10 2022 207 875 A1 bekannt. Dieser Nutzfahrzeugreifen weist Wulstbereiche mit je einem Kernprofil aus einem den Wulstkern kontaktierenden, radial inneren Kernprofilteil und einem den Wulstkern vorzugsweise nicht kontaktierenden radial äußeren Kernprofilteil auf. Der Spannungswert bei 100% Dehnung, ermittelt nach DIN 53504, des Gummimaterials des radial inneren Kernprofilteils ist um 2,00 MPa bis 30,00 MPa größer als jener des Gummimaterials des radial äußeren Kernprofilteils. Die Rückprallelastizität bei einer Temperatur von 70°C, ermittelt nach ISO 4662, des Gummimaterial des radial äußeren Kernprofilteils ist um 5,0 Prozentpunkte bis 50,0 Prozentpunkte größer als jene des Gummimaterials des radial inneren Kernprofilteils. Der Flächeninhalt der Querschnittsfläche des radial inneren Kernprofiteils beträgt 60% bis 160% des Flächeninhalts der Querschnittsfläche der Wulstkerns. Diese Zweiteilung des Kernprofils sorgt für einen guten Kompromiss im Hinblick auf den zwischen dem Rollwiderstand und der Wulsthaltbarkeit bestehenden Zielkonflikt.

Es ist bekannt, dass auf die Wulstbereiche von Nutzfahrzeugreifen, insbesondere bei mit hohem Gewicht beladenem Nutzfahrzeug, die Haltbarkeit der Wulstbereiche beeinflussende, hohe Kräfte wirken. Zur mechanischen Verstärkung der Wulstbereiche ist die Stahlkord enthaltende Karkasseinlage um die Wulstkerne umgeschlagen und es ist an der Außenseite der Karkasseinlage in jedem Wulstbereich ein Stahlkordwulstverstärker verbaut. In der Folge sind in den Wulstbereichen entsprechend große Mengen an Stahl vorhanden, welche deutlich zum Reifengewicht und in der Folge zum Rollwiderstand des Nutzfahrzeugreifens beitragen. Es ist wünschenswert, fortlaufend weitere Maßnahmen zur Reduktion des Rollwiderstands aufzufinden, wobei eine hohe Wulsthaltbarkeit aufrechtzuerhalten ist.

Der Erfindung liegt daher die Aufgabe zugrunde, bei einem Nutzfahrzeugreifen der eingangs genannten Art unter Aufrechterhaltung einer hohen Wulsthaltbarkeit eine weitere Reduktion im Rollwiderstand zu erzielen.

Gelöst wird die gestellte Aufgabe erfindungsgemäß dadurch, dass in zumindest einer, insbesondere genau einer, der Gürtellagen der bzw. die Stahlkord(e) zur Umfangsrichtung unter einem Winkel von 0° bis 5° verläuft bzw. verlaufen, wobei zumindest zwei, insbesondere sämtliche, der folgenden Merkmale vorhanden sind:
a) Die Stahlkorde des Stahlkordwulstverstärkers sind in dessen Gummimaterial in einer gemittelten Korddichte von höchstens 48 epdm angeordnet,
b) das Hochschlagende des Karkasshochschlags befindet sich in einer relativ zur Wulst-Bezugslinie in radialer Richtung ermittelten Höhe von höchstens 35,0 mm,
c) der Wulstkern weist, im Reifenquerschnitt betrachtet, eine auf den Kerndraht bezogene Querschnittsfläche mit einem Flächeninhalt von höchstens 90,0 mm² auf.

Überraschender Weise hat sich herausgestellt, dass der Einsatz einer an sich bekannten, sogenannten "0°-Gürtellage" besonders vorteilhaft für die Wulsthaltbarkeit ist. Dadurch ist es möglich, unter Aufrechterhaltung einer unverändert guten bzw. im Wesentlichen unverändert guten Wulsthaltbarkeit, die Wulstbereiche des Nutzfahrzeugreifen gegenüber bekannten Ausführungen zu verschlanken und ihr Gewicht deutlich zu reduzieren, sodass in der Folge der Rollwiderstand des Nutzfahrzeugreifens verringert ist. Die Gewichtsreduktion basiert auf eine Verringerung der in den Wulstbereichen insgesamt verbauten Menge an Stahl und/oder Metall. Es wird vermutet, dass die 0°-Gürtellage zu einer deutlichen Entlastung der Wulstbereiche führt bzw. die in die Wulstbereichen eingetragenen Kräfte durch die 0°-Gürtellage auf günstigere Weise verteilt werden.

Anschließend wird auf mehrere Gruppen von bevorzugten Ausgestaltungen eingegangen. Die zu verschiedenen Gruppen gehörenden Ausgestaltungen sind miteinander kombinierbar und umfassen jeweils bevorzugte Ausführungen sowie ggf. zu diesen gehörende Varianten.

Eine erste Gruppe von bevorzugten Ausgestaltungen befasst sich mit dem Stahlkordwulstverstärker.

Gemäß einer bevorzugten Ausführung sind die Stahlkorde des Stahlkordwulstverstärkers in dessen Gummimaterial in einer gemittelten Korddichte von zumindest 30 epdm, insbesondere von bis zu 46 epdm, bevorzugt von bis zu 44 epdm, besonders bevorzugt von höchstens 42 epdm, angeordnet. Dies sorgt für einen geringen Beitrag der Stahlkorde zum Reifengewicht, was für den Rollwiderstand besonders günstig ist.

In diesem Zusammenhang ist es zusätzlich vorteilhaft, wenn die Stahlkorde des Stahlkordwulstverstärkers in dessen Gummimaterial in einer Packungsdichte von 15% bis 30% angeordnet sind.

Weitere bevorzugte, zur ersten Gruppe gehörende, miteinander kombinierbare Ausführungen, auf welche nachfolgend eingegangen wird, tragen dazu bei, den Rollwiderstand des Reifens weiter zu verringern.

Gemäß einer diesbezüglich ersten bevorzugten Ausführung verläuft der reifeninnenseitige Stahlkordwulstverstärkerabschnitt über seine komplette Erstreckung in Kontakt mit der Karkasseinlage. Dementsprechend wird auf einen zwischen diesem Stahlkordwulstverstärkerabschnitt und der Karkasseinlage in diesem Bereich bisher häufig verbauten, reifeninnenseitigen Verstärkungsstreifen, welcher insbesondere entweder aus Gummimaterial oder aus in Gummimaterial eingebetteten textilen Korden besteht, verzichtet.

Gemäß einer diesbezüglich zweiten bevorzugten Ausführung weist das freie Ende des reifeninnenseitigen Stahlkordwulstverstärkerabschnitts - bezogen auf eine in axialer Richtung durch sein freies Ende verlaufende Bezugslinie - zur Hochschlag-Bezugslinie einen in radialer Richtung ermittelten Abstand von bis zu 20,0 mm, insbesondere von bis zu 15,0 mm, bevorzugt von 5,0 mm bis 10,0 mm, auf. Der reifeninnenseitige Stahlkordwulstverstärkerabschnitt ist daher entsprechend "kurz" ausgeführt.

Gemäß einer diesbezüglich dritten bevorzugten Ausführung weist das freie Ende des reifenaußenseitigen Stahlkordwulstverstärkerabschnitts - bezogen auf eine in axialer Richtung durch sein freies Ende verlaufende Bezugslinie - zur Hochschlag-Bezugslinie einen in radialer Richtung ermittelten Abstand von bis zu bis zu 20,0 mm, insbesondere von bis zu 15,0 mm, bevorzugt von 5,0 mm bis 10,0 mm, auf.

Es ist somit der reifeninnenseitige Stahlkordwulstverstärkerabschnitt entsprechend "kurz" ausgeführt.

Gemäß einer diesbezüglich vierten bevorzugten Ausführung beträgt die Höhe, in welcher sich das Hochschlagende des Karkasshochschlags befindet, 20,0 mm bis 33,0 mm, bevorzugt zumindest 25,0 mm. Die Untergrenze von zumindest 25,0 mm trägt zu einem besonders vorteilhaften Kompromiss zwischen der Wulsthaltbarkeit und dem Beitrag der Karkasseinlage zum Rollwiderstand bei.

Eine zweite Gruppe von bevorzugten Ausgestaltungen, auf welche nachfolgend eingegangen wird, befassen sich mit der Ausgestaltung des Kernprofils.

Eine diesbezügliche erste bevorzugte Ausführung sieht vor, dass sich das Kernprofil aus einem den Wulstkern kontaktierenden, radial inneren Kernprofilteil und einem den Wulstkern vorzugsweise nicht kontaktierenden radial äußeren Kernprofilteil zusammensetzt, wobei die Kernprofilteile jeweils aus einem Gummimaterial bestehen, welches einen Spannungswert bei 100% Dehnung und einer Temperatur von 25°C, ermittelt nach DIN 53504, und eine Rückprallelastizität bei einer Temperatur von 70°C, ermittelt nach DIN 53512, aufweist,
- wobei der Spannungswert des Gummimaterials des radial äußeren Kernprofilteils 0,50 MPa bis 9,00 MPa, insbesondere 0,75 MPa bis 7,50 MPa, bevorzugt 1,00 MPa bis 6,00 MPa, und besonders bevorzugt 2,50 MPa bis 5,00 MPa beträgt,
- wobei der Spannungswert des Gummimaterials des radial inneren Kernprofilteils um 2,00 MPa bis 30,00 MPa, insbesondere um 3,00 MPa bis 25,00 MPa, bevorzugt um 4,00 MPa bis 18,00 MPa, besonders bevorzugt um 4,50 MPa bis 16,00 MPa, am meisten bevorzugt um 6,00 MPa bis 12,00 MPa, größer ist als der Spannungswert des Gummimaterials des radial äußeren Kernprofilteils,
- wobei die Rückprallelastizität des Gummimaterials des radial inneren Kernprofilteils 25% bis 65%, insbesondere 30% bis 60%, und vorzugsweise zumindest 45% beträgt und
- wobei die Rückprallelastizität des Gummimaterials des radial äußeren Kernprofilteils um 5,0 Prozentpunkte bis 50,0 Prozentpunkte, insbesondere um 7,5 Prozentpunkte bis 45,0 Prozentpunkte, vorzugsweise um 9,0 Prozentpunkte bis 40,0 Prozentpunkte, und besonders bevorzugt um 10,0 Prozentpunkte bis 30,0 Prozentpunkte, größer ist als die Rückprallelastizität des Gummimaterials des radial inneren Kernprofilteils.

Der Spannungswert bei 100% Dehnung des Gummimaterials des radial inneren Kernprofilteils sorgt für eine "steifes" Gummimaterial, was für die Wulsthaltbarkeit günstig ist. Die angegebenen Rückprallelastizitäten bei 70°C der Gummimaterialien beider Apexteile sorgen für einen geringen Beitrag der Apexteile zum Rollwiderstand.

Es trägt zu einem besonders vorteilhaften Kompromiss zwischen dem Rollwiderstand des Reifens und der Wulsthaltbarkeit bei, wenn bei der letztgenannten Ausführung vorgesehen ist, dass der radial innere Kernprofilteil, im Reifenquerschnitt betrachtet, einen Flächeninhalt von 60% bis 160%, insbesondere von 70% bis 140%, bevorzugt von 75% bis 130%, besonders bevorzugt von 80% bis 120%, am meisten bevorzugt von bis zu 100%, des Flächeninhalts der auf den Kerndraht bezogenen Querschnittsfläche des Wulstkerns aufweist.

Eine weitere bevorzugte Ausgestaltung sieht vor, dass der Wulstkern aus einem einzigen Kerndraht oder aus mehreren Kerndrähten besteht, wobei die im Querschnitt erscheinende maximale Anzahl an Kerndrahtquerschnitten höchstens 45, insbesondere höchstens 40, beträgt. Dies ist ebenfalls für den Rollwiderstand günstig.

Eine dritte Gruppe von bevorzugten Ausgestaltungen, auf welche nachfolgend eingegangen wird, befassen sich mit einem sogenannten "Slim-Bead-Design".

Eine diesbezügliche bevorzugte Ausführung sieht vor, dass in jedem Wulstbereich am radial äußeren Ende des Kernprofils, im Reifenquerschnitt betrachtet, eine zwischen der Innenseite der Innenschicht und der Außenseite der Seitenwand als kleinstmöglicher Abstand ermittelte Dicke höchstens 12,0 mm, insbesondere höchstens 10,0 mm, beträgt. Dieser Bereich ist somit entsprechend "dünn" ausgeführt, was zu einem geringen Beitrag des Wulstbereichs zum Rollwiderstand beiträgt.

Gemäß einer bevorzugten Variante der letztgenannten, bevorzugten Ausführung weist die Außenseite der Seitenwand, im Reifenquerschnitt betrachtet, einen in Richtung Reifeninnraum durchgehend nach innen bogenförmig gekrümmt und durch die Messtelle der Dicke verlaufenden Außenseitenabschnitt und einen an diesen in Richtung Laufstreifen anschließenden, durchgehend nach außen bogenförmig gekrümmt verlaufenden Außenseitenabschnitt auf. Dies trägt zu einer Verschlankung des Wulstdesigns bei.

Bei der zuletzt erwähnten Variante ist es günstig, wenn der Außenseitenabschnitt, welcher durch die Messtelle der Dicke verläuft, im Reifenquerschnitt betrachtet, in einer relativ zur Wulst-Bezugslinie in radialer Richtung ermittelten Höhe von 40,0 mm bis 60,0 mm endet.

Eine weitere bevorzugte Ausgestaltung besteht darin, dass der Nutzfahrzeugreifen zur Montage auf einer gemäß E.T.R.T.O.-Standards genormten 15°-Tiefbettfelge (Breitencodes 5,25 bis 18,00) mit zwei Felgenhörnern mit je einer felgeninnenseitigen Sitzfläche und mit zwei Felgenschultern mit je einer Wulstsitzfläche vorgesehen ist, wobei die Hornprofile jeweils eine zwischen der Innenschicht und der Seitenwand verlaufende Außenfläche aufweisen, welche eine zur Innenschicht verlaufende Außenflächeninnenseite und eine an diese anschließende, mehrteilige Wulstsitzfläche umfasst, wobei sich die Wulstsitzfläche ausgehend von der von der Seitenwand aus einem im montierten Zustand des Nutzfahrzeugreifens mit der felgeninnenseitigen Sitzfläche des Felgenhorns in Kontakt stehendem ersten Segment, einem zweiten Segment, einem dritten Segment und einem vierten Segment zusammensetzt, wobei zumindest das erste, das zweite und das dritte Segmente bei auf der 15°-Tiefbettfelge montiertem Nutzfahrzeugreifen mit dieser zumindest teilweise in Kontakt stehen, wobei das erste und das zweite Segment einen Außenwinkel von 190° bis 225° einschließen, das zweite Segment zu einer in axialer Richtung verlaufenden Linie unter einem Innenwinkel von 15° verläuft, das zweite und das dritte Segment einen Außenwinkel von 165° bis 175° einschließen und das dritte und das vierte Segment einen Außenwinkel von 200° bis 210° einschließen.

Dies sorgt für eine gute Montierbarkeit des Reifens, wobei die Aufpumpbarkeit des Reifens und die Luftdichtheit erhalten bleiben. Die speziellen Winkelungen zwischen den vier Segmenten verringern eine plastische Verformung der Wulstbereiche des Nutzfahrzeugreifens und gewährleisten daher auch eine geringe Wulstzehenverformung, welche mit einer geringen Wulstflanschverformung der Felge einhergeht. Nutzfahrzeugreifen mit derart gestalteten Wulstbereichen zeichnen sich ferner durch eine hohe Wulsthaltbarkeit aus.

Weitere Merkmale, Vorteile und Einzelheiten der Erfindung werden nun anhand der Zeichnung, die schematisch ein Ausführungsbeispiel der Erfindung darstellt, näher beschrieben. Dabei zeigen
Fig. 1 einen Querschnitt durch einen Abschnitt einer 15°-Tiefbettfelge (15°Drop-Center-Rim),
Fig. 2 eine Hälfte eines Querschnitts einen Nutzfahrzeugreifens mit einer Ausführungsform der Erfindung und
Fig. 3 einen vergrößerten Querschnitt durch einen Wulstbereich des Nutzfahrzeugreifens gemäß dem Detail Z₃ der Fig. 2.

### 1. Zu nachfolgend verwendeten Ausdrücken

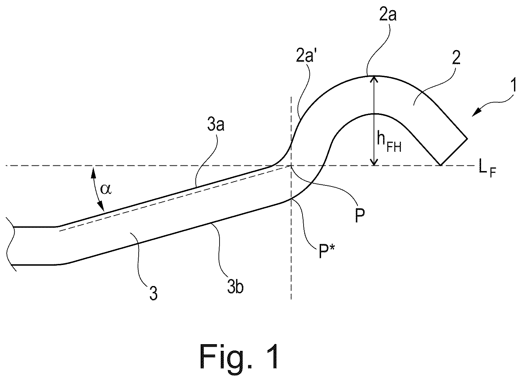

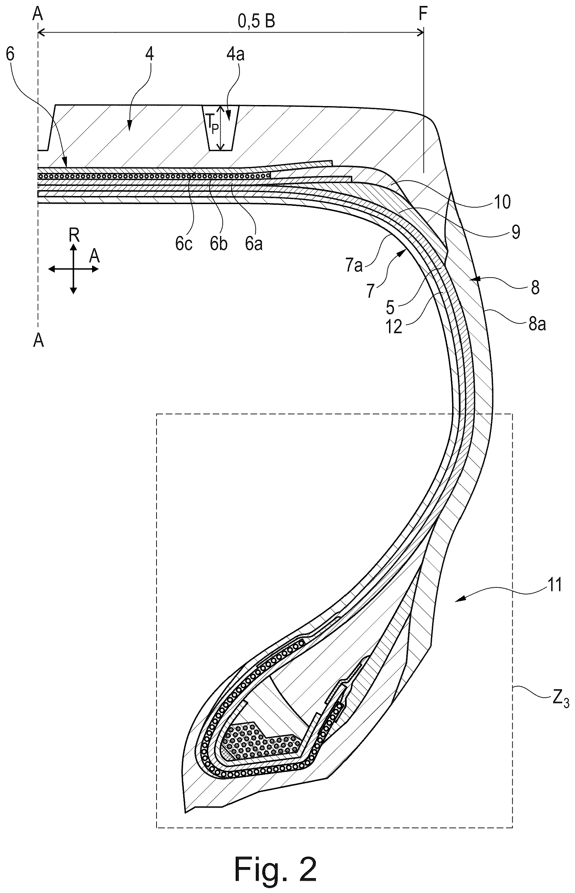

Der Ausdruck "Querschnitt" wird nachfolgend im Zusammenhang mit einer Felge 1 (siehe Fig. 1) und einem Nutzfahrzeugreifen (siehe Fig. 2) verwendet. Der Querschnitt der Felge 1 (Felgenquerschnitt) ist der zum Reifenquerschnitt analoge Querschnitt durch die Felge 1.

### 2. Allgemeine Beschreibung

Gemäß der Erfindung ausgeführte Nutzfahrzeugreifen sind Reifen für mehrspurige Nutzfahrzeuge, bevorzugt für Busse oder Lastkraftwagen (LKWs), sowie Fahrzeugluftreifen in Radialbauart. Nutzfahrzeugreifen weisen eine Tragfähigkeitskennzahl (load index) von insbesondere > 126 auf.

Der Nutzfahrzeugreifen ist ferner insbesondere zur Montage auf einer Felge 1 (Fig. 1) mit einem nominalen Durchmesser von 17,5 Zoll, 19,5 Zoll, 20,5 Zoll, 22,5 Zoll oder 24,5 Zoll vorgesehen, wobei die Felge 1 bevorzugt eine 15°-Tiefbettfelge (Breitencodes 5,25 bis 18,00) gemäß ETRTO-Standards-Manuel (European Tyre and Rim Technical Organisation Standards Manuel) in der aktuell gültigen Fassung (Februar 2025), Abschnitt "15° Drop-Centre Rims" ist.

Nachfolgend wird abschnittsweise auf die Felge 1 (Punkt 3), allgemein auf den Nutzfahrzeugreifen (Punkt 4), anschließend auf Bau- bzw. Bestandteile des Nutzfahrzeugreifens (Punkte 5 bis 10), zusammenfassend auf Wulstverstärkungslagen (Punkt 11), auf weitere Ausführungsbeispiele (Punkt 12) und auf Vorteile der vorgesehenen Wulstbereiche (Punkt 13) eingegangen.

### 3. Zur Felge 1

Fig. 1 zeigt einen Querschnitt durch einen randseitigen Abschnitt der bereits erwähnten Felge 1, welche eine 15°-Tiefbettfelge ist. Von der Felge 1 ist ein Felgenhorn 2 sowie eine in Richtung Tiefbett geneigte Felgenschulter 3 gezeigt. Die Felge 1 weist bekannter Weise einen Felgen-Nenndurchmesser und einen Felgen-Eckpunkt-Durchmesser auf.

Das Felgenhorn 2 weist eine Außenfläche 2a auf, welche eine felgeninnenseitige Sitzfläche 2a' umfasst. Die Felgenschulter 3 weist eine an die Sitzfläche 2a' anschließende, im Querschnitt gerade verlaufende Aufsitzfläche 3a und eine diese gegenüberliegende, parallel zu dieser verlaufende Unterseite 3b auf, welche in Richtung Felgenhorn 2 an einem in Umfangsrichtung umlaufenden Kreis, welcher in Fig. 1 durch einen Felgen-Nenndurchmesser-Bezugspunkt P* gekennzeichnet ist, endet.

Der Felgen-Nenndurchmesser-Bezugspunkt P* ist jener Punkt, auf welchen sich der erwähnte Felgen-Nenndurchmesser bezieht. Der Felgen-Nenndurchmesser ist ein Code ausschließlich für die Durchmesserangabe, wie sie in der Bezeichnung der Reifen- und Felgengrößen enthalten ist. Der Felgen-Nenndurchmesser-Bezugspunkt P* steht gemäß ETRTO-Standards-Manuel mit der Querschnittshöhe des Reifens im Zusammenhang, da die Querschnittshöhe die halbe Differenz zwischen dem Außendurchmesser und dem Felgen-Nenndurchmesser ist. Der Außendurchmesser ist dabei der Durchmesser des aufgepumpten Reifens an der äußersten Stelle der Lauffläche (Außenfläche des Laufstreifens), wobei die zugehörige Reifenmessung am unbelasteten, auf der zugeordneten Messfelge montiert und auf den empfohlenen Reifenluftdruck aufgepumpten Reifen vorzunehmen ist und wobei der Reifen mindestens 24 Stunden bei Raumtemperatur gelagert und anschließend der Luftdruck (Reifenluftdruck) wieder auf den ursprünglichen Wert eingestellt wird.

In Fig. 1 ist ferner ein Felgen-Eckpunkt-Bezugspunkt P eingezeichnet, welcher einen in Umfangsrichtung umlaufenden Kreis versinnbildlicht und jener Punkt ist, auf welchen sich der Felgen-Eckpunkt-Durchmesser bezieht, welcher gemäß ETRTO-Standards-Manuel der Durchmesser am Schnittpunkt der Felgenschulter 3 mit dem Felgenhorn 2 ist.

In Fig. 1 ist eine gerade und parallel zur nicht gezeigten Felgenachse (Rotationsachse der Felge 1) verlaufende Felgen-Bezugslinie L_{F} durch den Felgen-Eckpunkt-Bezugspunkt P eingezeichnet. Die Felgenschulter 3 und damit auch die Aufsitzfläche 3a verläuft relativ zur Felgen-Bezugslinie L_{F} unter einem Winkel α von 15°. Das Felgenhorn 2 weist, im Querschnitt betrachtet, eine relativ zur Felgen-Bezugslinie L_{F} in radialer Richtung ermittelte Höhe h_{FH} auf, welche dem in dieser Weise ermittelten, größtmöglichen Abstand zwischen der Außenfläche 2a und der Felgen-Bezugslinie L_{F} entspricht.

### 4. Allgemeine Beschreibung des Nutzfahrzeugreifens

Fig. 2 zeigt einen Teilquerschnitt durch einen nicht auf einer Felge montierten Nutzfahrzeugreifen, wobei die Reifenäquatorialebene durch eine Linie A-A, die radiale Richtung durch einen Doppelpfeil R und die axiale Richtung durch einen Doppelpfeil A gekennzeichnet ist. Die nachfolgenden Definitionen zur Reifenäquatorialebene, der axialen Richtung und der radialen Richtung beziehen sich auf den nicht auf einer Felge montierten Nutzfahrzeugreifen. Die "Reifenäquatorialebene" teilt den Nutzfahrzeugreifen in bekannter Weise bezüglich der Rotationsachse des Reifens in zwei Reifenhälften. Unter der "axialen Richtung" wird die senkrecht zur Reifenäquatorialebene verlaufende Richtung verstanden. Die "radiale Richtung" entspricht der im Reifenquerschnitt senkrecht zur axialen Richtung verlaufenden Richtung.

Der Nutzfahrzeugreifen weist einen profilierten Laufstreifen 4, eine Karkasseinlage 5, einen Gürtelverband 6, eine luftdichte Innenschicht 7 mit einer an den Reifeninnenraum angrenzenden Innenseite 7a, in jeder Reifenhälfte eine Seitenwand 8 mit einer Außenseite 8a, zwei Schulterpolster 9, 10, einen Wulstbereich 11 und ein reifeninnenseitiges Füllprofil 12 auf. Sämtlich der genannten Bauteile sind in Umfangsrichtung umlaufende Bauteile. Bevorzugt ist die nicht gezeigte Hälfte des Nutzfahrzeugreifens übereinstimmend zur gezeigten Hälfte ausgeführt.

### 5. Zum Laufstreifen 4

Der Laufstreifen 4 besteht beim gezeigten Ausführungsbeispiel aus einem einzigen Gummimaterial, weist eine Bodenaufstandsfläche auf, welche dem statisch ermittelten Footprint entspricht (Ermittlung gemäß ETRTO-Standards-Manual in der aktuell geltenden Fassung: Auf zugeordneter Normfelge montierter Reifen, Last gemäß 50% "load capacity per axle (kg), single" und zugehörigem Reifenluftdruck ("inflation pressure (kPa")) und deren seitlichen Ränder durch die Schnittpunkte zweier parallel zur Reifenäquatorialebene (Linie A-A) verlaufender Randflächen F (in Fig. 1 eine zu sehen) mit der Laufstreifenperipherie definiert sind und welche in axialer Richtung eine Breite B (in Fig. 1 ist 0,5 B zu sehen) aufweist.

Der Laufstreifen 4 weist eine in insbesondere bekannter Weise ausgeführte Profilierung auf, zu welcher beim Ausführungsbeispiel Umfangrille 4a gehören, die in radialer Richtung auf die jeweils vorgesehene Profiltiefe T_{P} von üblicherweise 12,0 mm bis 26,0 mm ausgeführt sind.

### 6. Zur Karkasseinlage 5

Die Karkasseinlage 5 ist beim Ausführungsbeispiel einlagig ausgeführt und besteht aus in einer Karkassgummierung eingebetteten, in insbesondere bekannter Weise ausgeführten und verlaufenden Stahlkorden (Anm.: Stahlkorde nicht gezeigt) und verläuft in bekannter Weise entlang der Innenschicht 7 sowie zwischen den Wulstbereichen 11, wobei die Führung der Karkasseinlage 5 in den Wulstbereichen 11 noch genauer erläutert wird (siehe Punkt 10.3). Die Stahlkorde der Karkasseinlage 5 verlaufen - wie für Nutzfahrzeugreifen in Radialbauart üblich - zur Umfangsrichtung unter einem Winkel von 90°.

### 7. Zum Gürtelverband 6

Der Gürtelverband 6 befindet sich zwischen dem Laufstreifen 4 und der Karkasseinlage 5, weist drei Gürtellagen, nämlich eine radial innere Gürtellage 6a, eine als 0°-Lage ausgeführte, mittlere Gürtellage 6b und eine radial äußere Gürtellage 6c, auf, wobei die Gürtellagen 6a, 6b, 6c jeweils aus in einer Gürtelgummierung eingebetteten, parallel zueinander verlaufenden Stahlkorde(n) bestehen.

Die in der radial inneren Gürtellage 6a und in der radial äußeren Gürtellage 6c enthaltenen Stahlkorde verlaufen zur Umfangsrichtung unter einem Winkel von 15° bis 22°, insbesondere von 16° bis 21°, bevorzugt von 18°, wobei die Stahlkorde der radial inneren Gürtellage 6a bezüglich der Umfangsrichtung vorzugsweise gegensinnig geneigt zu den Stahlkorden der radial äußeren Gürtellage 6c verlaufen.

Der bzw. die in der mittleren Gürtellage 6b enthaltenen Stahlkord(e) verläuft bzw. verlaufen zur Umfangsrichtung unter einem Winkel von 0° bis 5°, insbesondere von bis zu 3°. Die mittlere Gürtellage 6b kann mehrere nebeneinander liegende Stahlkorde oder nur einen einzigen Stahlkord aufweisen, wobei eine Gürtellage 6b mit einem einzigen Stahlkord in insbesondere bekannter Weise durch spiralförmiges Aufwickeln des gummierten Stahlkords aufgebaut wird.

### 8. Zu den Schulterpolstern 9, 10

Der Schulterposter 9 verläuft, im Reifenquerschnitt betrachtet, radial außerhalb sowie entlang der und in Kontakt mit der Karkasseinlage 5, ist in axialer Richtung (Doppelpfeil A) langgestreckt, weist eine im Wesentlichen dreieckförmige Querschnittfläche auf, kontaktiert die entsprechende Seitenwand 8 und verläuft in Richtung Reifenäquatorialebene (Linie A-A) zwischen die Karkasseinlage 5 und die radial innere Gürtellage 6a hinein. Der Schulterpolster 10 befindet sich radial außerhalb des Schulterpolsters 9, verläuft zwischen die radial innere Gürtellage 6a und die radial äußere Gürtellage 6c hinein, endet an der mittleren Gürtellage 6b und separiert derart die axial seitlich über die entsprechende Gürtelkante der mittleren Gürtellage 6b hinausverlaufenden Lagenrandabschnitte der Gürtellagen 6a, 6c.

### 9. Zum reifeninnenseitigen Füllprofil 12

Das reifeninnenseitige Füllprofil 12 besteht aus einem Gummimaterial und verläuft in Kontakt mit der Innenschicht 7 und der Karkasseinlage 5 sowie zwischen beiden Wulstbereichen 11 und endet in jedem Wulstbereich 11 reifeninnenseitig im Bereich der Innenschicht 7 oder läuft geringfügig über die Innenschicht 7 hinaus. Das reifeninnenseitige Füllprofil 12 ist ein optionaler Bauteil.

### 10. Zu den Wulstbereichen 11

Die weitere Ausgestaltung der Wulstbereiche 11 wird nachfolgend anhand eines einzelnen Wulstbereichs 11 erläutert.

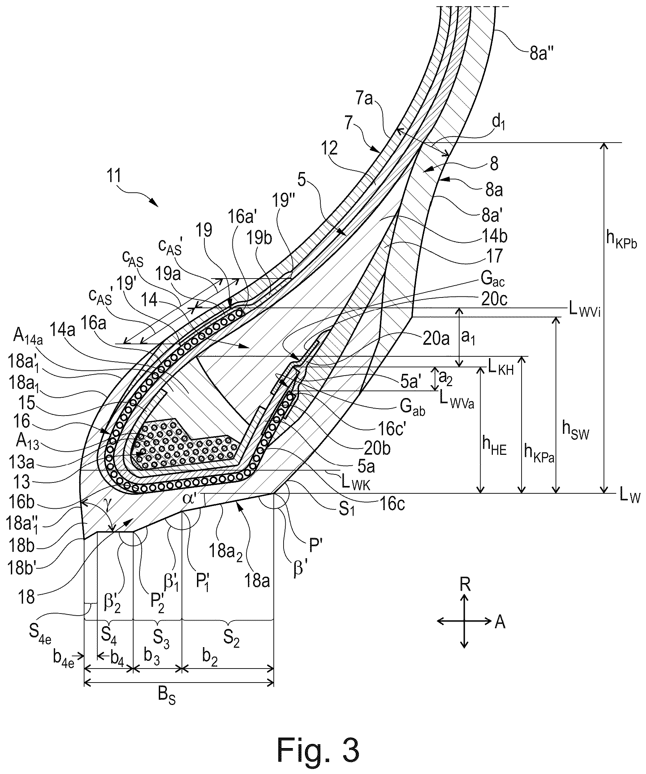

Gemäß Fig. 3 weist der Wulstbereich 11 mehrere jeweils in Umfangsrichtung umlaufende Wulstbauteile auf, zu welchen ein Wulstkern 13, ein auf diesem radial außen aufsitzendes, zweigeteiltes Kernprofil 14, eine Kernfahne 15, ein Stahlkordwulstverstärker 16, ein reifenaußenseitiges Füllprofil 17, ein Hornprofil 18, ein reifeninnenseitiger Abdeckstreifen 19 und drei reifenaußenseitige Abdeckstreifen 20a, 20b, 20c gehören. Sämtlich der Wulstbauteile sind in Umfangsrichtung umlaufende Bauteile. Ferner weist der Wulstbereich 11 ein sogenanntes "Slim-Bead-Design" auf, wie noch genauer erläutert wird.

### 10.1 Zum Hornprofil 18

Das Hornprofil 18 ist reifenaußenseitig abschnittsweise von der Seitenwand 8 überlappt und weist eine zwischen der Innenseite 7a der Innenschicht 7 und der Außenseite 8a der Seitenwand 8 verlaufende Außenfläche 18a auf, welche eine zur Innenseite 7a der Innenschicht 7 verlaufende Außenflächeninnenseite 18a₁ und eine an diese anschließende, mehrteilige Wulstsitzfläche 18a₂ umfasst.

Die nachfolgenden Ausführungen zur weiteren Ausgestaltung der Außenfläche 18a, also der Außenflächeninnenseite 18a₁ und der Wulstsitzfläche 18a₂, beziehen sich auf den Reifenquerschnitt, sofern nicht anders angegeben.

Die Außenflächeninnenseite 18a₁ weist einen von der Innenseite 7a der Innenschicht 7 ausgehenden, durchgehend nach außen gebogen (bogenförmig) verlaufenden Abschnitt 18a₁' und einen der Innenschicht 7 abgewandten, insbesondere gerade verlaufenden Endabschnitt 18a₁" auf. Der Abschnitt 18a₁' ist derart gebogen, dass ein Winkel, welcher von an den Abschnitt 18a₁' angelegten Tangenten mit der radialen Richtung eingeschlossen ist, in Richtung zur Innenseite 7a der Innenschicht 7 insbesondere fortlaufend zunimmt, wobei dieser Winkel im Bereich oberhalb des Wulstkerns 13 35° bis 45° beträgt. Der Endabschnitt 18a₁" reicht vorzugsweise höchstens bis zu einer Wulstkern-Bezugslinie L_{WK}, welche gerade sowie in axialer Richtung (Doppelpfeil A) durch die in radialer Richtung am weitesten vom Kernprofil 14 entfernteste Stelle des Wulstkerns 13 verläuft.

Die Wulstsitzfläche 18a₂ ist in vier flächige, unmittelbar aufeinanderfolgende, daher aneinander anschließende Segmente S₁, S₂, S₃, S₄ gegliedert, wobei von der Seitenwand 8 kommend, die Segmente S₁, S₂, S₃, S₄ in der Reihenfolge S₁ - S₂ - S₃ - S₄ aufeinanderfolgen. Die Segmente S₁, S₂, S₃, S₄ kommen bei der Montage des Nutzfahrzeugreifens mit der Felge 1 (Fig. 1) zumindest jeweils teilweise in Kontakt, wobei zumindest die Segmente S₁, S₂, S₃ bei auf der Felge 1 montiertem Nutzfahrzeugreifen jeweils zumindest teilweise in Kontakt mit der Felge 1 stehen. Das Segment S₄ steht bei auf der Felge 1 montiertem Nutzfahrzeugreifen mit der Felge 1 üblicherweise nicht in Kontakt.

Das Segment S₁ steht im montierten Zustand des Nutzfahrzeugreifens mit der felgeninnenseitigen Sitzfläche 2a' (Fig. 1) in Kontakt. Die Segmente S₂, S₃, S₄ kommen bei der Montage des Nutzfahrzeugreifens teilweise oder vollständig mit der Aufsitzfläche 3a (Fig. 1) in Kontakt, wobei die Segmente S₂, S₃ bei auf der Felge 1 montiertem Nutzfahrzeugreifen teilweise oder vollständig in Kontakt mit der Aufsitzfläche 3a (Fig. 1) stehen. Das Segment S₄, auf welches noch genauer eingegangen wird, umfasst einen Segmentendabschnitt S₄ₑ. Jedes Segment S₁, S₂, S₃ ist eine ringförmig umlaufende Fläche, welche, im Reifenquerschnitt betrachtet, als gerade verlaufende Linie erscheint. Das Segment S₄ ist ebenfalls eine ringförmig umlaufende Fläche, welche außerhalb des Segmentendabschnitts S₄ₑ, im Reifenquerschnitt betrachtet, als gerade verlaufende Linie erscheint. Das Segment S₁ ist entweder eine Mantelfläche eines Kegelstumpfes oder eines Kreiszylinders. Die Segmente S₂, S₃ sind Mantelflächen von Kegelstümpfen. Das Segment S₄ ist im Bereich außerhalb des Segmentendabschnitts S₄ₑ eine Mantelfläche eines Kegelstumpfens oder eines Kreiszylinders.

In Fig. 3 ist ein Wulst-Bezugspunkt P' eingezeichnet, welcher mit dem Felgen-Eckpunkt-Bezugspunkt P (Fig. 1) der Felge 1 korrespondiert und sich auf dem am Wulstbereich 11 umlaufenden Schnittkreis zwischen dem Segment S₁ und dem Segment S₂ befindet. Ferner ist eine durch den Wulst-Bezugspunkt P' in axialer Richtung verlaufende Wulst-Bezugslinie Lw, welche mit der Felgen-Bezugslinie L_{F} (Fig. 1) korrespondiert, eingezeichnet.

Bei einem Nutzfahrzeugreifen, welcher auf der gemäß ETRTO-Standards-Manuel vorgesehenen Messfelge montiert und unter den zugehörigen Reifenluftdruck (analog wie bei der Ermittlung der Bodenaufstandsfläche) gesetzt ist, stimmen - bedingt durch das Anpressen des Hornprofils 18 an die Felge 1 - der Felgen-Eckpunkt-Bezugspunkte P (Fig. 1) und der Wulst-Bezugspunkt P' überein bzw. im Wesentlichen überein. Nachfolgend angegebene Dimensionen, welche sich auf den nicht auf der zugehörigen Messfelge montierten Nutzfahrzeugreifen sowie auf die Wulst-Bezugslinie Lw beziehen, stimmen daher mit anlogen Dimensionen, welche sich auf den auf der zugehörigen Messfelge montierten, unter den zugehörigen Reifenluftdruck gesetzten Nutzfahrzeugreifen sowie auf die Felgen-Bezugslinie L_{F} beziehen, überein bzw. im Wesentlichen überein. "Im Wesentlichen übereinstimmen" bedeutet, dass etwaige Abweichungen bei den verschiedenen Messungen derart gering sind, dass diese im Rahmen der üblichen Fertigungstoleranzen von Nutzfahrzeugreifen liegen. Die Messungen am auf der Messfelge montierten, unter den zugehörigen Reifenluftdruck gesetzten Nutzfahrzeugreifen können mit einem geeigneten Reifen-Querschnitt-Scanner durchgeführt werden. Die Messungen am nicht montierten Nutzfahrzeugreifens können ebenfalls mit einem geeigneten Reifen-Querschnitt-Scanner oder durch Aufschneiden des Nutzfahrzeugreifens und nachfolgendes Vermessen durchgeführt werden. Im Rahmen der gegenständlichen Erfindung wurde die Messungen am nicht montierten, aufgeschnittenen Nutzfahrzeugreifen durchgeführt.

Das Segment S₁ reicht bis in eine relativ zur Wulst-Bezugslinie Lw in radialer Richtung ermittelte Höhe (nicht eingezeichnet), die zumindest der Höhe h_{FH} (Fig. 1) des Felgenhorns 2 der zugehörigen Felge 1 entspricht.

Das Segment S₁ schließt mit dem Segment S₂ einen Außenwinkel β' (Winkel ermittelt außerhalb des Wulstbereichs 11) von 190° bis 225° ein.

Das Segment S₂ verläuft relativ zu einer in axialer Richtung verlaufenden Linie, beispielsweise zur Wulst-Bezugslinie Lw, unter einem Innenwinkel α' (Winkel ermittelt innerhalb des Wulstbereichs 11) von 15°.

Die Segmente S₂ und S₃ schließen entlang eines auf dem Wulstbereich 11 umlaufenden Schnittkreises, welcher in Fig. 3 durch einen Punkt P₁' gekennzeichnet ist, aneinander an, wobei die Segmente S₂ und S₃ einen Außenwinkel β₁' von 165° bis 175° einschließen.

Die Segmente S₃ und S₄ schließen entlang eines weiteren, auf dem Wulstbereich 11 umlaufenden Schnittkreises, welcher in Fig. 1 durch einen Punkt P₂' gekennzeichnet ist, aneinander an, wobei die Segmente S₃ und S₄ einen Außenwinkel β₂' von 200° bis 210° einschließen.

Die Segmente S₂ bis S₄ verlaufen gemeinsam, also in Summe, über eine auf die Wulst-Bezugslinie L_{W} projiziert Gesamtbreite Bs, die - je nach Reifendimension - 20,00 mm bis 45,00 mm beträgt. Das Segment S₂ weist eine auf die Wulst-Bezugslinie L_{W} projizierte Breite b₂, das Segment S₃ eine auf die Wulst-Bezugslinie L_{W} projizierte Breite b₃ und das Segment S₄ eine auf die Wulst-Bezugslinie L_{W} projiziert Breite b₄ auf. Die Breite b₂ des Segmentes S₂ beträgt 40% bis 60%, insbesondere 45% bis 55%, der Gesamtbreite B. Die Breite b₄ des Segmentes S₄ beträgt 20% bis 35% der Gesamtbreite B. Die Breite b₃ des Segments S₃ resultiert aus den jeweiligen Breiten b₂, b₄.

Der Segmentendabschnitt S₄ₑ des Segments S₄ weist eine auf die Wulst-Bezugslinie Lw projizierte Breite b₄ₑ von 2,0 mm bis 5,0 mm auf, verläuft entlang eines Radius von 0,5 mm bis 3,0 mm und definiert gemeinsam mit dem Endabschnitt 18a₁" der Außenflächeninnenseite 18a₁ eine Wulstzehe 18b mit einer Zehenspitze 18b'. Der Endabschnitt 18a₁" schließt mit dem Segment S₄ - im Bereich außerhalb des Segmentendabschnitts S₄ₑ - einen sich auf den gegenseitigen Anschlusspunkt des Endabschnitts 18a₁" und des Abschnitts 18a₁' beziehenden Innenwinkel γ von 80° bis 90° ein. Die Zehenspitze 18b' kann zusätzlich schräg angefast sein.

Die Übergänge zwischen den einzelnen Segmenten S₁, S₂, S₃, S₄ sind als Knicklinien eingezeichnet, können jedoch auch geringfügig gerundet sein, daher beispielsweise mit Übergangsrundungen mit einem kleinen Radius in der Größenordnung von 1,0 mm bis 10,0 mm versehen sein. Solche Übergangsrundungen bleiben bei der Ermittlung der projizierten Breiten b₂, b₃, b₄ unberücksichtigt, sodass diese derart ermittelt sind, als wären die Segmente S₁, S₂, S₃, S₄ über die Übergangsrundungen fortgeführt.

### 10.2 Zum Wulstkern 13

Der Wulstkern 13 besteht aus in Umfangsrichtung umlaufendem, in Gummimaterial eingebettetem, zugfestem Kerndraht 13a, welcher insbesondere aus Metall oder Stahl gefertigt ist. Der Wulstkern 13 weist, im Reifenquerschnitt betrachtet, eine auf den Kerndraht 13a bezogene Querschnittsfläche mit einem Flächeninhalt A₁₃ von höchstens 90,0 mm² auf. Bei einem Wulstkern 13 aus einem einzigen Kerndraht 13a errechnet sich der Flächeninhalt A₁₃ der Querschnittsfläche des Wulstkerns 13 aus der maximalen Anzahl der Windungen multipliziert mit dem Flächeninhalt der Querschnittsfläche des Kerndrahts 13a. Die Anzahl der Windungen kann - in Abhängigkeit der Stelle des Reifenquerschnitts - um eine Windung variieren. Die "maximale Anzahl der Windungen" ist die Anzahl der Windungen an einer Stelle, an welcher die größte Anzahl an Windungen vorzufinden ist. Bei einem Wulstkern 13 aus einer Vielzahl von Kerndrähten 13a errechnet sich der Flächeninhalt A₁₃ der Querschnittsfläche des Wulstkerns 13 aus der Anzahl der Kerndrähte 13a multipliziert mit dem Flächeninhalt der Querschnittsfläche eines Kerndrahts 13a. Bei der Ermittlung des Flächeninhalts A₁₃ bleibt das den Kerndraht 13a bzw. die Kerndrähte 13a umgebende Gummimaterial daher unberücksichtigt. Die maximale Anzahl der Windungen (Wulstkern 13 aus einem einzigen Kerndraht) beträgt höchstens 45, insbesondere höchstens 40, und die maximale Anzahl von Kerndrähten 13a (Wulstkern 13 aus mehreren Kerndrähten) beträgt höchstens 45, insbesondere höchstens 40. Folglich beträgt die im Reifenquerschnitt erscheinende maximale Anzahl an Kerndrahtquerschnitten höchstens 45, insbesondere höchstens 40.

### 10.3 Zur Führung der Karkasseinlage 5

Die Karkasseinlage 5 verläuft in bekannter Weise zwischen den beiden Wulstkernen 13, ist um jeden Wulstkern 13 von der dem Reifeninnenraum, also der Innenschicht 7, zugewandten Seite kommend in Richtung Reifenaußenseite umgeschlagen und endet reifenaußenseitig neben dem Kernprofil 14 als Karkasshochschlag 5a mit einem Hochschlagende 5a' in einer relativ zur Wulst-Bezugslinie Lw in radialer Richtung ermittelten Höhe h_{HE} von höchstens 35,0 mm, insbesondere von 20,0 mm bis 33,0 mm, bevorzugt von zumindest 25,0 mm. In Fig. 3 ist eine in axialer Richtung durch das Hochschlagende 5a' verlaufende Hochschlag-Bezugslinie L_{KH} eingezeichnet, auf welche nachfolgend mehrfach Bezug genommen wird.

### 10.4 Zur Kernfahne 15

Die Kernfahne 15 besteht aus einem gummierten Textilgewebe, insbesondere aus gummiertem Nylongewebe, und ist derart um den Wulstkern 13 gelegt, dass sie die Karkasseinlage 5 vom Wulstkern 13 trennt. Die Kernfahne 15 ist optional.

### 10.5 Zum Kernprofil 14

Das zweigeteilte Kernprofil 14 setzt sich aus einem den Wulstkern 13 kontaktierenden, aus einem Gummimaterial bestehenden, radial inneren Kernprofilteil 14a und einem den Wulstkern 13 vorzugsweise nicht kontaktierenden, aus einem Gummimaterial bestehenden, radial äußeren Kernprofilteil 14b zusammen und reicht relativ zur Wulst-Bezugslinie Lw in eine in radialer Richtung ermittelte Höhe h_{KPb} von insbesondere zumindest 70,0 mm und endet in bekannter Weise vor der Messstelle der Querschnittsbreite des Reifens. Das Gummimaterial des radial inneren Kernprofilteils 14a unterscheidet sich vom Gummimaterial des radial äußeren Kernprofilteils 14b, wie nachfolgend noch genauer erläutert wird.

### 10.5.1 Zur Geometrie der Kernprofilteile 14a, 14b

Der radial innere Kernprofilteil 14a weist beim gezeigten Ausführungsbeispiel, im Reifenquerschnitt betrachtet, eine im Wesentlichen dreieckige Querschnittsfläche auf, läuft an seinem dem Wulstkern 13 abgewandten Ende entlang eines reifeninnenseitig verlaufenden Abschnitts der Karkasseinlage 5 aus und reicht bis in eine relativ zur Wulst-Bezugslinie Lw in radialer Richtung ermittelte Höhe h_{KPa}, welche 60% bis 125%, insbesondere 90% bis 110%, der bereits erwähnten Höhe h_{HE} des Karkasshochschlags 5a beträgt. Die Querschnittsfläche des radial inneren Kernprofilteils 14a weist einen Flächeninhalt A₁₄ₐ auf, welcher 60% bis 160%, insbesondere 70% bis 140%, bevorzugt 75% bis 130%, besonders bevorzugt 80% bis 120%, am meisten bevorzugt bis zu 100%, des Flächeninhalts A₁₃ der Querschnittsfläche des Wulstkerns 13 beträgt.

Der radial äußere Kernprofilteil 14b verläuft, im Reifenquerschnitt betrachtet, zwischen den Karkasshochschlag 5a und dem radial inneren Kernprofilteil 14a hinein und trennt derart gemeinsam mit der Kernfahne 15 den radial innere Kernprofilteil 14a vom Karkasshochschlag 5a.

### 10.5.2 Zum Gummimaterial der Kernprofilteile 14a, 14b

Nachfolgend wird auf Vulkanisateigenschaften der Gummimaterialien der Kernprofilteile 14a, 14b eingegangen, von welchen eine einen Rollwiderstandsindikator (Indikator für den Beitrag des Gummimaterials zum Rollwiderstand des Nutzfahrzeugreifens) und eine einen Wulsthaltbarkeitsindikator darstellt.

Tabelle 1 zeigt je ein Beispiel für eine Kautschukmischung für den radial inneren Kernprofilteil 14a (Kautschukmischung A) und für den radial äußeren Kernprofilteil 14b (Kautschukmischung B). Die Mengenangaben der Bestandteile der Kautschukmischungen A und B erfolgen in der Kautschuktechnologie üblichen Einheit phr (parts per hundred parts rubber). Die Mengenangaben beziehen sich dabei jeweils auf 100 Massenteile des Grundpolymers.

**Tabelle 1: Rezepte**

| | Kautschukmischung A | Kautschukmischung B |
|---|---|---|
| Naturkautschuk | 100 | 100 |
| Ruß N 339 | 90 | 25 |
| Silica BET 160 (Kieselsäure) | 0 | 15 |
| Öl (Weichmacher) | 6 | 3 |
| Phenolharz | 5 | 0 |
| Alterungsschutzmittel | 5 | 5 |
| Zinkoxid (Aktivator) | 3 | 3 |
| Stearinsäure (Aktivator) | 2 | 2 |
| Beschleuniger | 3 | 1,5 |
| Schwefel | 2,5 | 2,5 |

Als Rollwiderstandsindikator wird die Rückprallelastizität bei einer Temperatur von 70°C gemäß DIN 53512 herangezogen (nachfolgend als "Rückprallelastizität R (70°C)" bezeichnet). Je höher die Rückprallelastizität R (70°C) ist, desto geringer ist der zu erwartende Beitrag zum Rollwiderstand.

Als Wulsthaltbarkeitsindikator, welcher insbesondere im Zusammenhang mit der Wulststabilität steht, wird der Spannungswerte bei 100% Dehnung und einer Temperatur von 25°C gemäß DIN 53504 herangezogen (nachfolgend als "Spannungswert σ (100%)" bezeichnet). Die zu erwartende Wulsthaltbarkeit ist umso besser, je größer der Spannungswert σ (100%) ist.

Der Rollwiderstandsindikator, also die Rückprallelastizität R (70°C), wurde wie folgt ermittelt:
Ermittlung nach DIN 53512:
- Prüfung von Kautschuk und Elastomeren - Bestimmung der RückprallElastizität (Schob-Pendel)
- Ausgabe 2000-04
- Vulkanisationsparameter (Herstellung der Prüfkörper):
   ∘ Vulkanisationstemperatur: 160°
   ∘ Vulkanisationszeit: 15 Minuten
- Prüfkörper:
   ∘ Hergestellt durch Vulkanisation von planparallel Scheiben und Ausstanzen
   ∘ Abmessungen der Prüfkörper
      ▪ Durchmesser = 44,6 mm
      ▪ Dicke = 6,3 mm ± 0,3 mm
   - Prüfparameter:
      ∘ Verwendetes Gerät: Ausführung nach Schob
         ▪ Prüfkörperhalterung: Mechanische Klemmvorrichtung
      ∘ Anzahl der Prüfkörper (Angabe des arithmetischen Mittelwerts): Zwei
      ∘ Vorbehandlung der Prüfkörper:
         ▪ Temperierzeit: 30 Minuten
         ▪ Temperatur (Prüfkörpertemperatur): 70°C ± 1°C
      ∘ Prüftemperatur: 70°C ± 2°C

Der Wulsthaltbarkeitsindikator, also der Spannungswert σ (100%), wurde wie folgt ermittelt:
Ermittlung nach DIN 53504:
- Prüfung von Kautschuk und Elastomeren - Bestimmung von Reißfestigkeit, Zugfestigkeit, Reißdehnung und Spannungswerten im Zugversuch
- Ausgabe 2017-03
- Vulkanisationsparameter (Herstellung der Prüfkörper):
   ∘ Vulkanisationstemperatur: 160°C
   ∘ Vulkanisationszeit: 15 Minuten
   o Vulkanisation unter Druck
- Prüfkörper: Stabprobe (Stabprüfkörper) S3
- Messparameter:
   ∘ Temperierzeit: 30 Minuten
   ∘ Temperatur: 25°C ± 2°C

Die Gummimaterialien der Kernprofilteile 14a, 14b unterscheiden sich im Hinblick auf ihre Rückprallelastizitäten R (70°C) sowie bezüglich ihrer Spannungswerte σ (100%).

Das Gummimaterial des radial äußeren Kernprofilteils 14b weist einen Spannungswerte σ (100%) von 0,50 MPa bis 9,00 MPa, insbesondere von 0,75 MPa bis 7,50 MPa, bevorzugt von 1,00 MPa bis 6,00 MPa, und besonders bevorzugt von 2,50 MPa bis 5,00 MPa auf. Das Gummimaterial des radial inneren Kernprofilteils 14a weist einen Spannungswerte σ (100%) auf, welcher um 2,00 MPa bis 30,00 MPa, insbesondere um 3,00 MPa bis 25,00 MPa, bevorzugt um 4,00 MPa bis 18,00 MPa, besonders bevorzugt um 4,50 MPa bis 16,00 MPa, am meisten bevorzugt um 6,00 MPa bis 12,00 MPa, größer ist als der Spannungswert bei 100% Dehnung des Gummimaterials des radial äußeren Kernprofilteils 14b.

Das Gummimaterial des radial inneren Kernprofilteils 14a weist eine Rückprallelastizität R (70°C) auf, welche 25% bis 65%, insbesondere 30% bis 60%, und vorzugsweise zumindest 45% beträgt. Das Gummimaterial des radial äußeren Kernprofilteils 14b weist eine Rückprallelastizität R (70°C) auf, welche um 5,0 Prozentpunkte bis 50,0 Prozentpunkte, insbesondere um 7,5 Prozentpunkte bis 45,0 Prozentpunkte, vorzugsweise um 9,0 Prozentpunkte bis 40,0 Prozentpunkte, und besonders bevorzugt um 10,0 Prozentpunkte bis 30,0 Prozentpunkte, größer ist als die Rückprallelastizität bei 70°C des Gummimaterials des radial inneren Kernprofilteils 14a.

Bevorzugt sind die Gummimaterialen der Kernprofilteile 14a, 14b wie in der DE 10 2022 207 875 A1 beschrieben ausgeführt. Wie die in dieser Druckschrift beschriebenen Reifentests zeigen, weist ein die erläuterten Kernprofilteile 14a, 14b aufweisender Nutzfahrzeugreifen einen geringen Rollwiderstand und eine gute Wulsthaltbarkeit auf.

### 10.6 Zum Slim-Bead-Desgin

Das Slim-Bead-Design des Wulstbereichs 11 kennzeichnet sich dadurch, dass am radial äußeren Ende des Kernprofils 14, also am radial äußeren Ende des radial äußeren Kernprofilteils 14b, der Wulstbereich 11, betrachtet im Reifenquerschnitt, eine zwischen der Innenseite 7a der Innenschicht 7 und der Außenseite 8a der Seitenwand 8 als kleinstmöglichen Abstand ermittelte Dicke d₁ von höchstens 12,0 mm, insbesondere von höchstens 10,0 mm, aufweist. Bei der Ermittlung der Dicke d₁ bleiben etwaige gegenüber dem Niveau der Außenseite 8a der Seitenwand 8 erhabene Vorsprünge und gegenüber diesem Niveau ausgebildete Vertiefungen unberücksichtigt (Analog zur Ermittlung der Querschnittsbreite gemäß ETRTO-Standards-Manual). Die Messung der Dicke d₁ folgt daher an einer von etwaigen Vertiefungen und Vorsprüngen freien Stelle der Außenseite 8a der Seitenwand 8 bzw. derart, dass das Niveau der Außenseite 8a der Seitenwand 8 über die entsprechende Stelle interpoliert ist.

Bevorzugt weist die Außenseite 8a der Seitenwand 8, im Reifenquerschnitt betrachtet, einen in Richtung Reifeninnraum durchgehend nach innen bogenförmig gekrümmt und durch die Messtelle der Dicke d₁ verlaufenden, Außenseitenabschnitt 8a' und einen an diesen in Richtung Laufstreifen 4 anschließenden, durchgehend nach außen bogenförmig gekrümmt verlaufenden Außenseitenabschnitt 8a" auf. Die Außenseitenabschnitte 8a', 8a" verlaufen insbesondere jeweils entlang eines Kreisbogens. Der Außenseitenabschnitt 8a' endet in Richtung Wulstsitzfläche 18a₂ in einer relativ zur Wulst-Bezugslinie Lw in radialer Richtung ermittelten Höhe hsw von 40,0 mm bis 60,0 mm.

### 10.7 Zum reifenaußenseitigen Füllprofil 17

Das reifenaußenseitige Füllprofil 17 verläuft reifenaußenseitig des Kernprofils 14 sowie abschnittsweise in Kontakt mit dem Hornprofil 18 und abschnittsweise in Kontakt mit der Seitenwand 8 und läuft ferner in Kontakt mit dem radial äußeren Kernprofilteil 14b und der Seitenwand 8 aus.

### 10.8 Zum Stahlkordwulstverstärker 16

Der Stahlkordwulstverstärker 16 ist einlagig ausgeführt und besteht aus in Gummimaterial eingebetteten, kreuzungsfrei und im Wesentlichen parallel zueinander verlaufenden Stahlkorden, welche relativ zu den Stahlkorden der Karkasseinlage 5 unter einem Winkel von zumindest 10,0°, insbesondere von zumindest 20°, verlaufen. Der Stahlkordwulstverstärker 16 verläuft an der dem Wulstkern 13 abgewandten Seite der Karkasseinlage 5 und setzt sich aus einem reifeninnenseitigen Stahlkordwulstverstärkerabschnitt 16a mit einem axial seitlich des Kernprofils 14 liegenden, freien Ende 16a', einem mittleren Stahlkordwulstverstärkerabschnitt 16b und einem reifenaußenseitigen Stahlkordwulstverstärkerabschnitt 16c mit einem axial seitlich des Kernprofils 14 liegenden, freien Ende 16c' zusammen, wobei die Unterteilung in die Stahlkordwulstverstärkerabschnitte 16a, 16b, 16c an den Schnittstellen mit der Wulstkern-Bezugslinie L_{WK} erfolgt.

Der reifeninnenseitige Stahlkordwulstverstärkerabschnitt 16a verläuft über seine komplette Erstreckung in Kontakt mit der Karkasseinlage 5 und kreuzt die Hochschlag-Bezugslinie L_{KH}, wobei sein freies Ende 16a' - bezogen auf eine in axialer Richtung durch das freie Ende 16a' verlaufende Bezugslinie L_{WVi} - zur Hochschlag-Bezugslinie L_{KH} einen in radialer Richtung ermittelten Abstand a₁ von bis zu 20,0 mm, insbesondere von bis zu 15,0 mm, bevorzugt von 5,0 mm bis 10,0 mm, aufweist. Der mittlere Stahlkordwulstverstärkerabschnitt 16b verläuft jeweils über seine komplette Erstreckung in Kontakt mit der Karkasseinlage 5. Der reifenaußenseitige Stahlkordwulstverstärkerabschnitt 16c verläuft ausgehend vom mittleren Stahlkordwulstverstärkerabschnitt 16b abschnittsweise in Kontakt mit der Karkasseinlage 5, also dem Karkasshochschlag 5a, sowie zwischen dem Karkasshochschlag 5a und dem reifeaußenseitigen Füllprofil 17, endet vor der Hochschlag-Bezugslinie L_{KH}, kreuzt diese daher nicht, wobei sein freies Ende 16c' - bezogen auf eine in axialer Richtung durch das freie Ende 16ca' verlaufende Bezugslinie L_{WVa} - zur Hochschlag-Bezugslinie L_{KH} einen in radialer Richtung ermittelten Abstand a₂ von bis zu 20,0 mm, insbesondere von bis zu 15,0 mm, bevorzugt von 5,0 mm bis 10,0 mm, aufweist.

Die Stahlkorde des Stahlkordwulstverstärkers 16 sind in dessen Gummimaterial in einer gemittelten Korddichte von 30 epdm (ends per decimeter) bis 48 epdm, insbesondere von bis zu 46 epdm, bevorzugt von bis zu 44 epdm, besonders bevorzugt von bis zu 42 epdm, angeordnet. Zur Ermittlung der "gemittelten Korddichte" wird der gesamte Stahlkordwulstverstärker 16 im Reifenquerschnitt betrachtet, sodass die jeweilige Gesamtanzahl der Stahlkorde und die Gesamtlänge des Stahlkordwulstverstärkers 16 bestimmt und aus diesen Größen die gemittelte Korddichte errechnet wird. Durch die gemittelte Korddichte wird berücksichtigt, dass sich die Stahlkorde im Zuge des Reifenaufbaus und der Vulkanisation innerhalb der entsprechenden Kautschukmischung, aus welcher sich das Gummimaterial des Stahlkordwulstverstärkers 16 bildet, geringfügig verschieben können. Bevorzugt sind die Stahlkorde des Stahlkordwulstverstärkers 16 in dessen Gummimaterial in einer Packungsdichte von 15% bis 30% angeordnet. Die Packungsdichte beschreibt, im senkrecht zur Längserstreckung der Stahlkorde verlaufenden Querschnitt betrachtet, den durch die Messstellen der Durchmesser der Stahlkorde verlaufenden prozentualen Längenanteil der Stahlkord an der Gesamtlänge des Stahlkordwulstverstärkers 16. Beispielsweise weist ein Stahlkordwulstverstärker 16, in welchem die Stahlkorde mit einer gemittelten Korddichte von 40 epdm angeordnet sind und jeweils einen Durchmesser von 0,50 mm aufweisen, eine Packungsdichte von 0,2 bzw. von 20% auf (= 40 x 0,50 mm / 100 mm = 0,2 ≙ 20%).

### 10.9 Zu den Abdeckstreifen 19, 20a, 20b, 20c

Die Abdeckstreifen 19, 20a, 20b, 20c bestehen jeweils aus einem Gummimaterial.

Der reifeninnenseitige Abdeckstreifen 19 befindet sich reifeninnenseitig der Karkasseinlage 5 und verläuft abschnittsweise zwischen dem reifeninnenseitigen Füllprofil 12 und dem reifeninnenseitigen Stahlkordwulstverstärkerabschnitt 16a sowie abschnittsweise zwischen dem reifeninnenseitigen Füllprofil 12 und der Karkasseinlage 5, sodass der reifeninnenseitige Abdeckstreifen 19 über das freie Ende 16a' des reifeninnenseitigen Stahlkordwulstverstärkerabschnitts 16a verläuft, dieses also abdeckt. Der reifeninnenseitige Abdeckstreifen 19 weist ein gegenüber dem freien Ende 16a' des reifeninnenseitigen Stahlkordwulstverstärkerabschnitts 16a in Richtung zum Hornprofil 18 versetzt liegendes, radial inneres Streifenende 19', ein in die entgegengesetzte Richtung versetztes, radial äußeres Streifenende 19" und eine Erstreckungslänge c_{AS} auf, welche entlang einer zwischen dem radial inneren Streifenende 19' und dem radial äußeren Streifenende 19" gerade verlaufenden Linie ermittelt ist und 20,0 mm bis 80,0 mm, insbesondere 30,0 mm bis 50,0 mm, beträgt (Anm.: In Fig. 2 ist die Erstreckungslänge c_{AS} aus Übersichtsgründen entlang einer parallel zu erwähnten Linie verlaufenden Linie eingezeichnet). Der reifeninnenseitige Abdeckstreifen 19 setzt sich aus einem radial inneren Streifenabschnitt 19a und einem radial äußeren Streifenabschnitt 19b zusammen, wobei die Unterteilung in die Streifenabschnitte 19a, 19b an der durch das freie Ende 16a' des reifeninnenseitigen Stahlkordwulstverstärkerabschnitts 16a verlaufenden Bezugslinie L_{WVi} erfolgt. Jeder Streifenabschnitt 19a, 19b weist eine parallel zur Erstreckungslänge c_{AS} gemessene Erstreckungslänge c_{AS}' von 30% bis 70%, insbesondere von 40% bis 60%, der Erstreckungslänge c_{AS} auf.

Der reifenaußenseitige Abdeckstreifen 20a verläuft entlang des reifenaußenseitigen Füllprofils 17 und jeweils abschnittsweise entlang des reifenaußenseitigen Stahlkordwulstverstärkerabschnitts 16c sowie des Karkasshochschlags 5a und endet in Richtung Laufstreifen 4 (Fig. 1) zwischen dem radial äußeren Kernprofilteil 14b und dem reifenaußenseitigen Füllprofil 17, sodass der Abdeckstreifen 20a das freie Ende 16c' des reifenaußenseitigen Stahlkordwulstverstärkerabschnitts 16c und das Hochschlagende 5a' des Karkasshochschlags 5a abdeckt.

Der reifenaußenseitige Abdeckstreifen 20b verläuft abschnittsweise zwischen dem Karkasshochschlag 5a und dem reifenaußenseitigen

Stahlkordwulstverstärkerabschnitt 16c und bildet mit dem reifenaußenseitigen Abdeckstreifen 20a ein Gabelprofil G_{ab}, welches einen das freie Ende 16c' des reifenaußenseitigen Stahlkordwulstverstärkerabschnitts 16c umfassenden Endabschnitt des reifenaußenseitigen Stahlkordwulstverstärkerabschnitts 16c einfasst.

Der reifenaußenseitige Abdeckstreifen 20c verläuft entlang des radial äußeren Kernprofilteils 14b und abschnittsweise entlang des Karkasshochschlags 5a, endet in Kontakt mit dem reifenaußenseitigen Abdeckstreifen 20a und bildet mit diesem ein Gabelprofil G_{ac}, welches einen das Hochschlagende 5a' des Karkasshochschlags 5a umfassenden Endabschnitt des Karkasshochschlags 5a einfasst.

### 11. Zu den Wulstverstärkungslagen

Als Wulstverstärkungslagen werde jene Lagen verstanden, die Festigkeitsträger enthalten und komplett in den Wulstbereichen 11 verlaufen. Zu den Wulstverstärkungslagen gehören somit ausschließlich die Kernfahne 15 und der Stahlkordwulstverstärker 16. Neben diesen sind keine weiteren Wulstverstärkungslagen vorgesehen. Wie bereits unter Punkt 10.4 erwähnt, kann auf die Kernfahne 15 verzichtet werden. Wie ebenfalls bereits beschrieben (siehe Punkt 10.8), weist der Stahlkordwulstverstärker 16 eine "geringe" Dichte an Stahlkorden auf.

### 12. Weitere Ausführungsbeispiele

Die Erfindung ist auf das beschriebene Ausführungsbeispiel nicht beschränkt.

Der radial innere Kernprofilteil 14a kann, im Reifenquerschnitt betrachtet, eine von der dreieckigen Querschnittsfläche abweichende Querschnittsfläche aufweisen. Die Kernfahne 15, die Füllprofile 12, 17 sowie die Abdeckstreifen 19, 20a, 20b, 20c ist bzw. sind optional. Die Querschnittsfläche des Wulstkerns 16 kann von der gezeigten Querschnittsfläche abweichen, wobei der Wulstkern 16 insbesondere die Form eines Hexagons bzw. eines Kreises oder eine von der Form der Hexagons oder des Kreises abgeleitete Form aufweist. Eine solche abgeleitete Form ist beispielsweise eine Querschnittsfläche in Form eines Hexagons mit einem etwa parallelogrammförmig ausgesparten Eckbereich. Das Silm-Bead-Design ist ebenfalls optional.

Der Gürtelverband 6 weist zumindest drei Gürtellagen, insbesondere genau drei, genau vier oder genau fünf Gürtellagen auf, wobei die mittlere Gürtellage bzw. eine der mittleren Gürtellagen als 0°-Lage ausgeführt ist. Bei fünf Gürtellagen ist bevorzugt die dritte Gürtellage die 0°-Lage.

Zwischen der Karkasseinlage 5 und der Innenschicht 7 kann ein bzw. können mehrere, insbesondere zwei, in an sich bekannter Weise ausgeführte(r), aus Gummimaterial bestehende(r), in Umfangsrichtung umlaufende(r) Squeegee(s) verbaut sein. Insbesondere ist ein einziger die Karkasseinlage 5 von der Innenschicht 7 trennender Squeegee vorgesehen. Alternativ können mehrere, insbesondere zwei lokale, bevorzugt jeweils in den Schulterbereichen verbauet Squeegees vorhanden sein.

### 13. Vorteile der Wulstbereiche

Bedingt durch den Einsatz einer 0°-Gürtellage lassen sich die Wulstbereiche 11 gegenüber Wulstbereichen bekannter Nutzfahrzeugreifen auf eine im Hinblick auf den Rollwiderstand günstigen Weise vereinfachen, wobei eine unverändert gute bzw. im Wesentlichen unverändert gute Wulsthaltbarkeit erhalten bleibt. Diese Vereinfachungen haben eine deutliche Reduktion der in den Wulstbereichen 11 insgesamt verbauten Menge an Stahl und/oder Metall zur Folge, sodass die Wulstbereiche 11 deutlich weniger zum Gewicht des Nutzfahrzeugreifens beitragen und in der Folge der Rollwiderstand reduziert ist. Die Reduktion der Stahl- und/oder Metallmenge ist durch den spezifischen Wulstaufbau gegeben (siehe 10.2 Zum Wulstkern 13, 10.3 Zur Führung der Karkasseinlage 5, 10.8 Zum Stahlkordwulstverstärker 16, 11. Zu den Wulstverstärkungslagen (Verzicht auf weitere Wulstverstärkungslagen)). Durch das Slim-Bead-Design (siehe 10.6) wird der Rollwiderstand weiter reduziert.

### Bezugszeichenliste

- 1: Felge
- 2: Felgenhorn
- 2a: Außenfläche
- 2a': Sitzfläche
- 3: Felgenschulter
- 3a: Aufsitzfläche
- 3b: Unterseite
- 4: Laufstreifen
- 4a: Umfangsrille
- 5: Karkasseinlage
- 5a: Karkasshochschlag
- 5a': Hochschlagende
- 6: Gürtelverband
- 6a: radial innere Gürtellage
- 6b: mittlere Gürtellage
- 6c: radial äußere Gürtellage
- 7: Innenschicht
- 7a: Innenseite
- 8: Seitenwand
- 8a: Außenseite
- 8a': Außenseitenabschnitt
- 8a": Außenseitenabschnitt
- 9: Schulterpolster
- 10: Schulterpolster
- 11: Wulstbereich
- 12: reifeninnenseitiges Füllprofil
- 13: Wulstkern
- 13a: Kerndraht
- 14: Kernprofil
- 14a: radial innerer Kernprofilteil
- 14b: radial äußerer Kernprofilteil
- 15: Kernfahne
- 16: Stahlkordwulstverstärker
- 16a: reifeninnenseitiger Stahlkordwulstverstärkerabschnitt
- 16a': freies Ende
- 16b: mittlerer Stahlkordwulstverstärkerabschnitt
- 16c: reifenaußenseitiger Stahlkordwulstverstärkerabschnitt
- 16c': freies Ende
- 17: reifenaußenseitiges Füllprofil
- 18: Hornprofil
- 18a: Außenfläche
- 18a₁: Außenflächeninnenseite
- 18a₁': Abschnitt
- 18a ₁": Endabschnitt
- 18a₂: Wulstsitzfläche
- 18b: Wulstzehe
- 18b': Zehenspitze
- 19: reifeninnenseitiger Abdeckstreifen
- 19': radial inneres Streifenende
- 19": radial äußeres Streifenende
- 20a: reifenaußenseitiger Abdeckstreifen
- 20b: reifenaußenseitiger Abdeckstreifen
- 20c: reifenaußenseitiger Abdeckstreifen
- A: Doppelpfeil (axiale Richtung)
- A-A: Linie (Reifenäquatorialebene)
- A₁₃, A₁₄ₐ: Flächeninhalt
- a₁, a₂: Abstand
- B: Breite
- Bs: projizierte Gesamtbreite
- b₂, b₃, b₄, b₄ₑ: projizierte Breite
- c_{AS}, c_{AS}': Erstreckungslänge
- d₁: Dicke
- F: Randfläche
- G_{ab}, G_{ac}: Gabelprofil
- h_{FH}, h_{HE}, h_{KPa}, h_{KPb}, h_{SW}: Höhe
- L_{F}: Felgen-Bezugslinie
- L_{KH}: Hochschlag-Bezugslinie
- L_{W}: Wulst-Bezugslinie
- L_{WK}: Wulstkern-Bezugslinie
- L_{WVa}, L_{WVi}: Bezugslinie
- P: Felgen-Eckpunkt-Bezugspunkt
- P: Wulst-Bezugspunkt
- P*: Felgen-Nenndurchmesser-Bezugspunkt
- P₁', P_{2'}: Punkt
- S₁, S₂, S₃, S₄: Segment
- S₄ₑ: Segmentendabschnitt
- T_{P}: Profiltiefe
- R: Doppelpfeil (radiale Richtung)
- Z₃: Detail
- α: Winkel
- α': Innenwinkel
- β', β₁', β₂': Außenwinkel
- γ: Innenwinkel

## Patentansprüche

1. Nutzfahrzeugreifen mit einer Karkasseinlage (5), einem Gürtelverband (6) mit zumindest drei Gürtellagen (6a, 6b, 6c) und mit Wulstbereichen (11) mit jeweils einem mit einem Felgen-Eckpunkt-Bezugspunkt (P) korrespondierenden Wulst-Bezugspunkt (P'), einer in axialer Richtung durch diesen verlaufende Wulst-Bezugslinie (Lw) und mit Wulstbauteilen (13, 14, 15, 16, 17, 18, 19, 20a, 20b, 20c), zu welchen ein Wulstkern (13) aus einem Kerndraht (13a), ein Kernprofil (14) und ein Stahlkordwulstverstärker (16) gehören,
wobei die Karkasseinlage (5) in jedem Wulstbereich (11) von der dem Reifeninnenraum zugewandten Seite kommend in Richtung Reifenaußenseite um den Wulstkern (13) umgeschlagen ist sowie reifenaußenseitig einen Karkasshochschlag (5a) mit einem neben dem Kernprofil (14) liegenden Hochschlagende (5a') und einer im Reifenquerschnitt durch dieses in axialer Richtung verlaufenden Hochschlag-Bezugslinie (L_{KH}) aufweist,
wobei der Stahlkordwulstverstärker (16) aus in Gummimaterial eingebetteten Stahlkorden besteht, an der dem Wulstkern (13) abgewandten Seite der Karkasseinlage (5) verläuft und, im Reifenquerschnitt betrachtet, einen die Hochschlag-Bezugslinie (L_{KH}) kreuzenden, reifeninnenseitigen Stahlkordwulstverstärkerabschnitt (16a) mit einen axial seitlich des Kernprofils (14) liegenden, freien Ende (16a') und einen die Hochschlag-Bezugslinie (L_{KH}) nicht kreuzenden, reifenaußenseitigen Stahlkordwulstverstärkerabschnitt (16c) mit einem im axial seitlich des Karkasshochschlags (5a) liegenden, freien Ende (16c') umfasst,
**dadurch gekenzeichnet**,
dass in zumindest einer, insbesondere genau einer, der Gürtellagen (6b) der bzw. die Stahlkord(e) zur Umfangsrichtung unter einem Winkel von 0° bis 5° verläuft bzw. verlaufen, wobei zumindest zwei, insbesondere sämtliche, der folgenden Merkmale vorhanden sind:
a) Die Stahlkorde des Stahlkordwulstverstärkers (16) sind in dessen Gummimaterial in einer gemittelten Korddichte von höchstens 48 epdm angeordnet,
b) das Hochschlagende (5a') des Karkasshochschlags (5a) befindet sich in einer relativ zur Wulst-Bezugslinie (Lw) in radialer Richtung ermittelten Höhe (h_{HE}) von höchstens 35,0 mm,
c) der Wulstkern (13) weist, im Reifenquerschnitt betrachtet, eine auf den Kerndraht (13a) bezogene Querschnittsfläche mit einem Flächeninhalt (A₁₃) von höchstens 90,0 mm² auf.

2. Nutzfahrzeugreifen nach Anspruch 1, **dadurch gekennzeichnet, dass** die Stahlkorde des Stahlkordwulstverstärkers (16) in dessen Gummimaterial in einer gemittelten Korddichte von zumindest 30 epdm, insbesondere von bis zu 46 epdm, bevorzugt von bis zu 44 epdm, besonders bevorzugt von höchstens 42 epdm, angeordnet sind.

3. Nutzfahrzeugreifen nach Anspruch 1 oder 2, **dadurch gekennzeichnet, dass** die Stahlkorde des Stahlkordwulstverstärkers (16) in dessen Gummimaterial in einer Packungsdichte von 15% bis 30% angeordnet sind.

4. Nutzfahrzeugreifen nach einem der Ansprüche 1 bis 3, **dadurch gekennzeichnet, dass** der reifeninnenseitige Stahlkordwulstverstärkerabschnitt (16a) über seine komplette Erstreckung in Kontakt mit der Karkasseinlage (5) verläuft.

5. Nutzfahrzeugreifen nach einem der Ansprüche 1 bis 4, **dadurch gekennzeichnet, dass** das freie Ende (16a') des reifeninnenseitigen Stahlkordwulstverstärkerabschnitts (16a) - bezogen auf eine in axialer Richtung durch sein freies Ende (16a') verlaufende Bezugslinie (L_{WVi}) - zur Hochschlag-Bezugslinie (L_{KH}) einen in radialer Richtung ermittelten Abstand (a₁) von bis zu 20,0 mm, insbesondere von bis zu 15,0 mm, bevorzugt von 5,0 mm bis 10,0 mm, aufweist.

6. Nutzfahrzeugreifen nach einem der Ansprüche 1 bis 5, **dadurch gekennzeichnet, dass** das freie Ende (16c') des reifenaußenseitigen Stahlkordwulstverstärkerabschnitts (16c) - bezogen auf eine in axialer Richtung durch sein freies Ende (16a') verlaufende Bezugslinie (L_{WVa}) - zur Hochschlag-Bezugslinie (L_{KH}) einen in radialer Richtung ermittelten Abstand (a₂) von bis zu bis zu 20,0 mm, insbesondere von bis zu 15,0 mm, bevorzugt von 5,0 mm bis 10,0 mm, aufweist.

7. Nutzfahrzeugreifen nach einem der Ansprüche 1 bis 6, **dadurch gekennzeichnet, dass** die Höhe (h_{HE}), in welcher sich das Hochschlagende (5a') des Karkasshochschlags (5a) befindet, 20,0 mm bis 33,0 mm, bevorzugt zumindest 25,0 mm, beträgt.

8. Nutzfahrzeugreifen nach einem der Ansprüche 1 bis 7, **dadurch gekennzeichnet, dass** sich das Kernprofil (14) aus einem den Wulstkern (13) kontaktierenden, radial inneren Kernprofilteil (14a) und einem den Wulstkern (13) vorzugsweise nicht kontaktierenden radial äußeren Kernprofilteil (14b) zusammensetzt, wobei die Kernprofilteile (14a, 14b) jeweils aus einem Gummimaterial bestehen, welches einen Spannungswert bei 100% Dehnung und einer Temperatur von 25°C (σ (100%)), ermittelt nach DIN 53504, und eine Rückprallelastizität bei einer Temperatur von 70°C (R (70°C)), ermittelt nach DIN 53512, aufweist,
- wobei der Spannungswert (σ (100%)) des Gummimaterials des radial äußeren Kernprofilteils (14b) 0,50 MPa bis 9,00 MPa, insbesondere 0,75 MPa bis 7,50 MPa, bevorzugt 1,00 MPa bis 6,00 MPa, und besonders bevorzugt 2,50 MPa bis 5,00 MPa beträgt,
- wobei der Spannungswert (σ (100%)) des Gummimaterials des radial inneren Kernprofilteils (14a) um 2,00 MPa bis 30,00 MPa, insbesondere um 3,00 MPa bis 25,00 MPa, bevorzugt um 4,00 MPa bis 18,00 MPa, besonders bevorzugt um 4,50 MPa bis 16,00 MPa, am meisten bevorzugt um 6,00 MPa bis 12,00 MPa, größer ist als der Spannungswert (σ (100%) des Gummimaterials des radial äußeren Kernprofilteils (14b),
- wobei die Rückprallelastizität (R (70°C)) des Gummimaterials des radial inneren Kernprofilteils (14a) 25% bis 65%, insbesondere 30% bis 60%, und vorzugsweise zumindest 45% beträgt und
- wobei die Rückprallelastizität (R (70°C)) des Gummimaterials des radial äußeren Kernprofilteils (14b) um 5,0 Prozentpunkte bis 50,0 Prozentpunkte, insbesondere um 7,5 Prozentpunkte bis 45,0 Prozentpunkte, vorzugsweise um 9,0 Prozentpunkte bis 40,0 Prozentpunkte, und besonders bevorzugt um 10,0 Prozentpunkte bis 30,0 Prozentpunkte, größer ist als die Rückprallelastizität (R (70°C)) des Gummimaterials des radial inneren Kernprofilteils (14a).

9. Nutzfahrzeugreifen nach Anspruch 8, **dadurch gekennzeichnet, dass** der radial innere Kernprofilteil (14a), im Reifenquerschnitt betrachtet, einen Flächeninhalt (A₁₄ₐ) von 60% bis 160%, insbesondere von 70% bis 140%, bevorzugt von 75% bis 130%, besonders bevorzugt von 80% bis 120%, am meisten bevorzugt von bis zu 100%, des Flächeninhalts (A₁₃) der auf den Kerndraht (13a) bezogenen Querschnittsfläche des Wulstkerns (13) aufweist.

10. Nutzfahrzeugreifen nach einem, der Ansprüche 1 bis 9, **dadurch gekennzeichnet, dass** der Wulstkern (13) aus einem einzigen Kerndraht (13a) oder aus mehreren Kerndrähten (13a) besteht, wobei die im Querschnitt erscheinende maximale Anzahl an Kerndrahtquerschnitten höchstens 45, insbesondere höchstens 40, beträgt.

11. Nutzfahrzeugreifen nach einem der Ansprüche 1 bis 10, **dadurch gekennzeichnet, dass** in jedem Wulstbereich (11) am radial äußeren Ende des Kernprofils (14), im Reifenquerschnitt betrachtet, eine zwischen der Innenseite (7a) der Innenschicht (7) und der Außenseite (8a) der Seitenwand (8) als kleinstmöglicher Abstand ermittelte Dicke (d₁) höchstens 12,0 mm, insbesondere höchstens 10,0 mm, beträgt.

12. Nutzfahrzeugreifen nach Anspruch 11, **dadurch gekennzeichnet, dass** die Außenseite (8a) der Seitenwand (8), im Reifenquerschnitt betrachtet, einen in Richtung Reifeninnraum durchgehend nach innen bogenförmig gekrümmt und durch die Messtelle der Dicke (d₁) verlaufenden Außenseitenabschnitt (8a') und einen an diesen in Richtung Laufstreifen (4) anschließenden, durchgehend nach außen bogenförmig gekrümmt verlaufenden Außenseitenabschnitt (8a") aufweist.

13. Nutzfahrzeugreifen nach Anspruch 12, **dadurch gekennzeichnet, dass** der Außenseitenabschnitt (8a'), welcher durch die Messtelle der Dicke (d₁) verläuft, im Reifenquerschnitt betrachtet, in einer relativ zur Wulst-Bezugslinie (Lw) in radialer Richtung ermittelten Höhe (hsw) von 40,0 mm bis 60,0 mm endet.

14. Nutzfahrzeugreifen nach einem der Ansprüche 1 bis 13, **dadurch gekennzeichnet, dass** er zur Montage auf einer gemäß E.T.R.T.O.-Standards genormten 15°-Tiefbettfelge (Breitencodes 5,25 bis 18,00) mit zwei Felgenhörnern (2) mit je einer felgeninnenseitigen Sitzfläche (2a) und mit zwei Felgenschultern (3) mit je einer Wulstsitzfläche (3a) vorgesehen ist, wobei die Hornprofile (18) jeweils eine zwischen der Innenschicht (7) und der Seitenwand (8) verlaufende Außenfläche (18a) aufweisen, welche eine zur Innenschicht (7) verlaufende Außenflächeninnenseite (18a₁) und eine an diese anschließende, mehrteilige Wulstsitzfläche (18a₂) umfasst, wobei sich die Wulstsitzfläche (18a₂) ausgehend von der von der Seitenwand (8) aus einem im montierten Zustand des Nutzfahrzeugreifens mit der felgeninnenseitigen Sitzfläche (2a) des Felgenhorns (2) in Kontakt stehendem ersten Segment (S₁), einem zweiten Segment (S₂), einem dritten Segment (S₃) und einem vierten Segment (S₄) zusammensetzt, wobei zumindest das erste, das zweite und das dritte Segmente (S₁, S₂, S₃) bei auf der 15°-Tiefbettfelge montiertem Nutzfahrzeugreifen mit dieser zumindest teilweise in Kontakt stehen,
wobei das erste und das zweite Segment (S₁, S₂) einen Außenwinkel (β') von 190° bis 225° einschließen, das zweite Segment (S₂) zu einer in axialer Richtung verlaufenden Linie unter einem Innenwinkel (α') von 15° verläuft, das zweite und das dritte Segment (S₂, S₃) einen Außenwinkel (β₁') von 165° bis 175° einschließen und das dritte und das vierte Segment (S₃, S₄) einen Außenwinkel (β₂') von 200° bis 210° einschließen.
